# EUROPEAN PATENT APPLICATION

(11) **EP 3 301 941 A1**
(43) Date of publication of application: **04.04.2018**
(21) Application number: 16306259.9
(22) Date of filing: 30.09.2016
(51) Int. Cl.: H04N 21/436, H04N 21/442, H04N 21/443, H04N 21/45, H04N 21/475

(54) **SMART START-UP OF AUDIO/VISUAL EQUIPMENT**

(71) Applicant: Thomson Licensing, 92130 Issy-les-Moulineaux (FR)
(72) Inventor: FILOCHE, Thierry, 35576 CESSON-SEVIGNE (FR); HEEN, Olivier, 35576 CESSON-SEVIGNE (FR); ELUARD, Marc, 35576 CESSON-SEVIGNE (FR); JEANNE, Ludovic, 35576 CESSON-SEVIGNE (FR)
(74) Representative: Huchet, Anne

(57) **Abstract**

Methods and systems for activating a device include tracking user actions for multiple connected devices. A transition likelihood is determined that characterizes the likelihood that a user will activate a second device after a first device has been activated for each pair of connected devices, based on the tracked user actions. A device is activated responsive to a user action based on the transition likelihood and the tracked user actions.

## Description

### TECHNICAL FIELD

The present invention generally relates to consumer electronics and, more specifically, to tracking user habits to automatically start devices with an input most likely to be desired by the user.

### BACKGROUND

Modern audio/visual equipment uses the high-definition multimedia interface (HDMI) to communicate between content sources such as, e.g., a cable box or media player, and a visual display and/or speaker. At the start of a main HDMI switch device (such as a switch, a home cinema amplifier, or a television itself), the HDMI input that is initially active is rarely the one desired by the user. For example, the initial input selection may be based on a default (such as, e.g., the first input in a sequence), the last selected input, or the first input having an active device connected.

In addition, when an input device is selected and activated, it also has a starting state that may be contrary to the user's desires. For example, if a cable box is selected, the cable box may initially tune to a default channel or to the last selected channel, when some other channel may be preferred.

Changing from these defaults (of the input device and the input device's initial state) can be a tedious process, forcing a user to perform an inconvenient sequence of commands on a remote control or on the device itself to reach the desired state, resulting in an unpleasant user experience.

### SUMMARY

A method for activating a device includes tracking user actions for multiple connected devices. A transition likelihood is determined that characterizes the likelihood that a user will activate a second device after a first device has been activated for each pair of connected devices, based on the tracked user actions. A device is activated responsive to a user action based on the transition likelihood and the tracked user actions.

A system for activating a device includes a habit tracking module configured to track user actions for multiple connected devices. A data analysis module having a processor is configured to determine a transition likelihood that characterizes the likelihood that a user will activate a second device after a first device has been activated for each pair of connected devices, based on the tracked user actions. A control module is configured to activate a device responsive to a user action based on the transition likelihood and the tracked user actions.

### BRIEF DESCRIPTION OF THE DRAWINGS

The teachings of the present invention can be readily understood by considering the following detailed description in conjunction with the accompanying drawings, in which:
FIG. 1 is a block diagram of a home theater system in accordance with the present embodiments;
FIG. 2 is a block diagram of a home theater system in accordance with the present embodiments;
FIG. 3 is a block diagram of a home theater system in accordance with the present embodiments;
FIG. 4 is a block/flow diagram of a method of selecting a device to activate upon startup in accordance with the present embodiments;
FIG. 5 is a table showing exemplary user action records in accordance with the present embodiments;
FIG. 6 is a block diagram of a smart startup module in accordance with the present embodiments; and
FIG. 7 is a block diagram of a processing system in accordance with the present embodiments.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

### DETAILED DESCRIPTION OF PREFERRED EMBODIMENTS

Embodiments of the present principles track user habits to predict what input device and what device state a user will want to have displayed. The present embodiments then activate that device and cause it to play the desired content (if that action is possible) upon start-up. To accomplish this, the present embodiments make use of the high-definition multimedia interface (HDMI) consumer electronic control (CEC) protocol, which communicates device identification information and allows connected devices to issue commands to other connected devices.

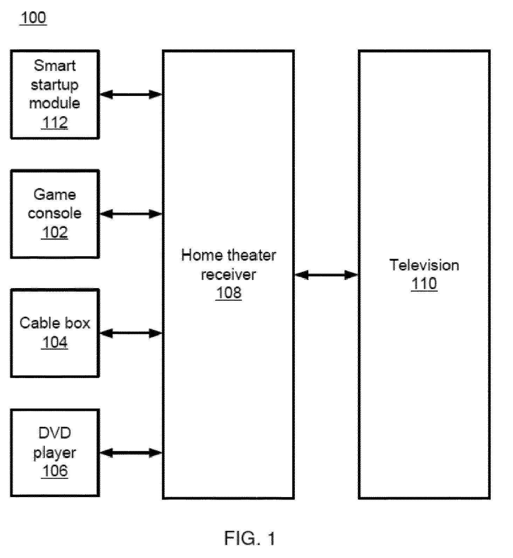

Referring now to FIG. 1, an exemplary home theater arrangement 100 is shown. A variety of devices are connected to home theater receiver 108, including for example a game console 102, a cable box 104, and a DVD player 106. The receiver 108, in turn, is connected to a television 112. In this arrangement 100, a smart startup module 112 is connected to the receiver 108 and controls which devices are activated and in which state when the user activates the television 110. The game console 102, the cable box 104, the DVD player 106, the receiver 108, and the television 112 are referred to collectively herein as the "connected devices," as they are all connected to one another, directly or indirectly, through a connection medium and protocol such as, e.g., HDMI.

It should be understood that the present embodiments are not limited to a home theater arrangement but may be employed in any system having multiple audio/visual devices. For example, the same principles apply to a purely audio system without any visual display at all, and any of a variety of content providing devices may be used instead of those listed. The present embodiments are selected solely for the sake of explanation and should not be construed as being in any way limiting.

It should particularly be understood that the smart startup module 112 may be a standalone device or may be incorporated with one or all of the other devices. It should also be understood that, although it is specifically contemplated that all of the devices are connected to one another via HDMI connections and communicate using the HDMI CEC protocol, any appropriate interconnection system and communication protocol may be used instead. For example, the devices may be connected to one another via USB, Ethernet, or any other appropriate wired or wireless communication medium and protocol.

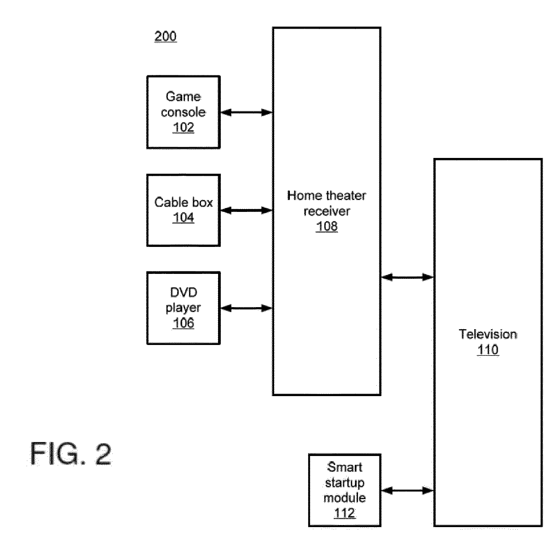

Referring now to FIG. 2, an alternative home theater arrangement 200 is shown. In this arrangement 200, the smart startup module 112 is connected directly to the television 110.

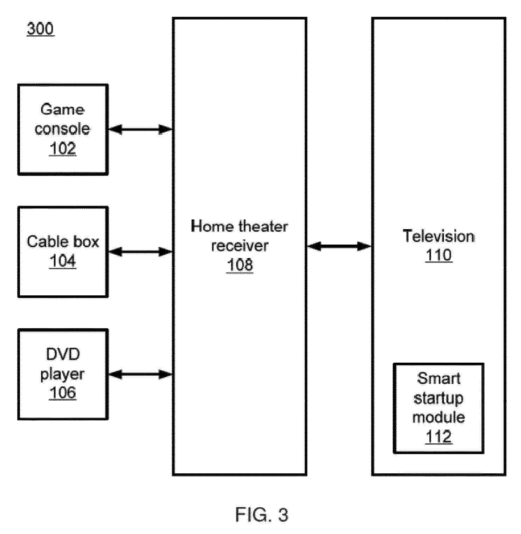

Referring now to FIG. 3, an alternative home theater arrangement 300 is shown. In this arrangement 300, the smart startup module 112 is incorporated in the home theater receiver 108.

The present embodiments therefore provide for the smart startup module being a standalone device or, alternatively, being incorporated in one or all of the different devices. The smart startup module 112 monitors the communications between the content devices, the home theater receiver 108, and the television 110 to track the user's habits. This tracked information may include pattern information (e.g., noting an order and sequence of device activations) and calendar information (e.g., noting user patterns across days of the week or times of day). The smart startup module 112 can then detect the activation of the television 110 and select a corresponding input for the television in accordance with the tracked information, optionally turning on the corresponding device.

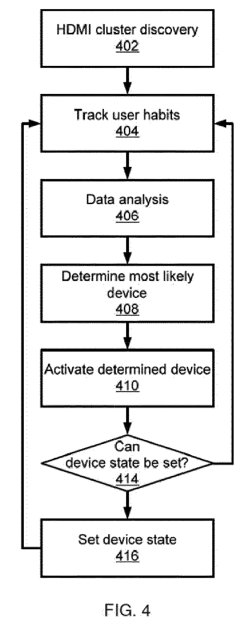

Referring now to FIG. 4, a method for managing device activation is shown. Block 402 performs HDMI cluster discovery at the smart startup module 112. HDMI cluster discovery detects other connected HDMI devices based on their communications. It should be understood that, in embodiments not based on HDMI connections, the discovery may be performed using an appropriate protocol feature such as, e.g., address resolution protocol (ARP). HDMI discovery in particular may be performed using one or more of several available CEC messages including, e.g., "polling message," "give physical address," "get CEC version," and "report physical address." These messages are defined in detail in the HDMI CEC specification. The smart startup module 112 uses these messages to construct a network map that includes a table of associations between physical addresses and logical addresses. Block 402 may additionally update the network map during operation by monitoring CEC traffic and, more specifically, CEC messages such as, "routing information, "routing change," and "report physical address." CEC-enabled devices transmit their own physical and logical addresses to other connected devices, allowing the smart startup module 112 to keep the network map up to date. It should be noted that many manufacturers implement the CEC protocol in their devices, but use different names.

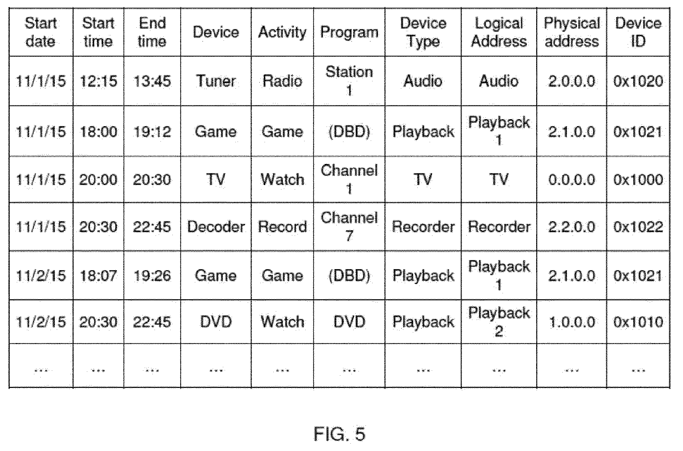

Block 404 tracks the user's habits in operating the connected devices. The smart startup module 112 records the connected devices' actions by, e.g., monitoring HDMI traffic, and building a table of such actions. An exemplary table of device actions is discussed below with respect to FIG. 5. The tracked information may be stored locally in the smart startup module 112 or may, alternatively, be stored remotely (e.g., within a home network or "cloud" storage environment). The user habit table may be continually updated as the user takes new actions.

The user actions may include the following information: Device type (e.g., TV, recording device, tuner, playback device, audio system, HDMI switch, processor), Physical address (e.g., HDMI address in the format x.x.x.x), Logical address (e.g., HDMI description of each function of the device, such as Recorder device 1, Playback device 2, etc.), Device ID (e.g., a unique identifier for the device), Reference date (e.g., an earliest date to consider), Number of uses (e.g., the number of times a device has been used since the reference date), Frequency of uses (e.g., a number of uses per week since the reference date), etc.

Block 406 performs analysis on the recorded user habit data. This analysis may include, for example, forming a Markov transition table based on the recorded user habit data. The Markov transition table may, for example, list each device and indicate the likelihood that a particular other connected device will be activated next. For example, based on the user habit data, the Markov transition table may reflect a likelihood of, e.g., 60% that the user will activate the device "Playback device 1" if the device "Tuner 1" is active. An exemplary Markov transition table is shown as Table 1.

**Table 1**

| | Audio system | Tuner 1 | Playback device 1 | Playback device 2 | Recording device 1 | Television |
|---|---|---|---|---|---|---|
| Audio system | 0 | 0.1 | 0.4 | 0.2 | 0.2 | 0.1 |
| Tuner 1 | 0 | 0.1 | 0.6 | 0.1 | 0.1 | 0.1 |
| Playback device 1 | 0 | 0.1 | 0.3 | 0 | 0.5 | 0.1 |
| Playback device 2 | 0 | 0.1 | 0.1 | 0.2 | 0.5 | 0.1 |
| Recording device 1 | 0 | 0.1 | 0.5 | 0.2 | 0.1 | 0.1 |
| Television | 0 | 0.1 | 0.3 | 0 | 0.5 | 0.1 |

Each entry in the Markov transition table shows a likelihood, as a fraction of 1, that the device in the column in question will be activated after the device in the row in question. For example, in the example of Table 1, if a user first activates the device "Tuner 1," there is, in on embodiment, a 10"% of chance of activating 'Tuner 1' or 40% chance of activating other devices.

Block 408 then determines the most likely next device to activate based on the user habit data and the transition table. For example, at the first startup of the system in a day, the smart startup module 112 may look at the user habit data to determine which device is the most likely to be used based on, e.g., the time of day and the day of the week (noting for example that user habits may be quite different on weekdays versus weekends). For subsequent startups during the same day, the smart startup module 112 may consider both the user habit data and the transition table to make a selection. Block 408 may alternatively determine a list of devices, ordered by likelihood of next activation, in case one or more of the most likely devices is disabled.

Block 410 issues commands to activate the device and use the activated device as input to an appropriate playback device such as, e.g., the television 110. In an HDMI embodiment, CEC messages may be used to implement these commands. Exemplary CEC messages that may be used toward this end include, e.g., "Set stream path," and "Active source." It is possible that the device cannot be activated, for example if the device is powered off or disconnected. In this case, block 410 may attempt to activate the next most likely device and may continue this process until either a device is successfully activated or until no device is activated, in which case a default selection may be activated.

Block 414 determines whether the device state can be set and, if so, block 416 sets the device state. As contemplated herein, "device state" includes, for example, a channel or station to which a tuner is tuned (e.g., a particular television channel on a cable box, a radio station on a radio receiver, a particular internet media stream, etc.). Block 416 therefore issues a command using, e.g., CEC messages to set the device state. After this has been accomplished, processing returns to block 404 to continue tracking user habits.

Referring now to FIG. 5, an exemplary table of recorded user habit data is shown. Each row of the table indicates a particular activity record, identifying the timing information for the activity (e.g., date, start time, and end time), the device performing the activity, the activity being performed, the specific program being played (in some cases "determined by device" or "(DBD)," for example when device does not provide specific information regarding the activity), logical and physical addresses, and a device identifier. It should be understood that a single physical device may have multiple device types and multiple logical addresses corresponding to multiple functions. For example, the television 110 may have the capability of both displaying received television signals and recording such signals.

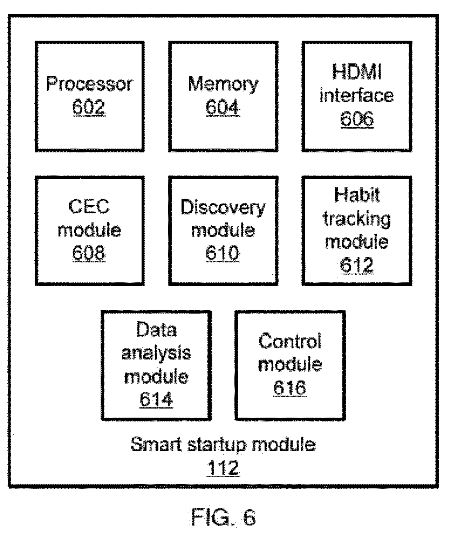

Referring now to FIG. 6, additional detail on the smart startup module 112 is shown. It should be understood that the smart startup module 112 may be implemented as a single device, as described herein, or may, in alternate embodiments, have its functions split between multiple devices in multiple locations (e.g., in a single home network or in a cloud computing environment). The smart startup module 112 includes a hardware processor 602 and a memory 604. In addition, the smart startup module 112 includes an HDMI interface 606 or other communications interface that allows the smart startup module 112 to communicate with the connected devices. It should be understood that at least the HDMI interface 606 will be physically connected to, or incorporated within, at least one of the connected devices.

In addition, the smart startup module 112 includes one or more functional modules. These functional modules may be implemented as, e.g., software that is stored in memory 604 and executed by processor 602. In alternate embodiments, the functional modules may be implemented as one or more discrete hardware components in the form of, e.g., application specific integrated chips or field programmable gate arrays.

A CEC module 608 reads and sends CEC messages over the HDMI interface 606. In embodiments that operate with a different variety of interface, the CEC module 608 may be replaced by a communications module operating with an appropriate communications protocol. The CEC module 608 decodes messages received by the HDMI interface 606, including those messages that are directed toward other connected devices instead of being directed toward the smart startup module 112. The CEC module 608 furthermore creates CEC messages that the HDMI interface 606 communicates to one or more connected devices.

A discovery module 610 performs discovery of the connected devices to build a network map. A habit tracking module 612 then records usage of all the connected devices discovered by the discovery module 610 and stores the usage information in the memory 604. Data analysis module 614 then uses the stored usage information to determine the best device to select for activation and the best device state to select for each device. A control module 616 then determines the appropriate action to take, for example activating a specific device and directing the device to tune to a particular channel or piece of audio/visual content.

In a distributed embodiment, the smart startup "module" 112 may be split across multiple distinct devices. In one particularly contemplated embodiment, the HDMI interface 606 may be connected directly to an HDMI cluster with the discovery module 610 and the CEC module 608. The habit tracking module 612 and control module 616, meanwhile, may be located on a different device on the user's home network, for example on a personal computer. The data analysis module 614 may be implemented at a remote location, for example in a cloud computing solution. It should be understood that the different functions of the smart startup module 112 may distributed in any appropriate way.

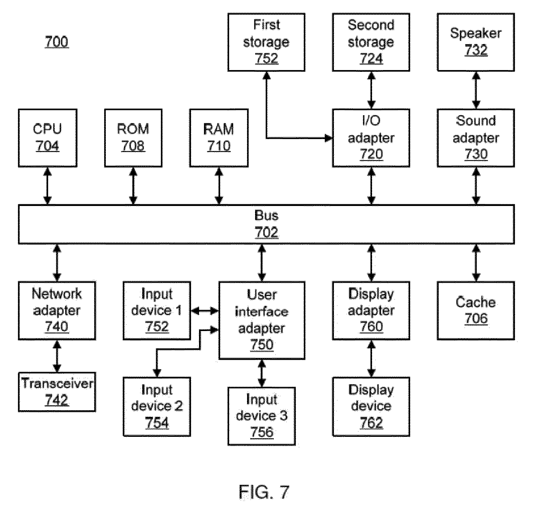

Referring now to FIG. 7, an exemplary processing system 700 is shown which may represent the smart startup module 112. The processing system 700 includes at least one processor (CPU) 704 operatively coupled to other components via a system bus 702. A cache 706, a Read Only Memory (ROM) 708, a Random Access Memory (RAM) 710, an input/output (I/O) adapter 720, a sound adapter 730, a network adapter 740, a user interface adapter 750, and a display adapter 760, are operatively coupled to the system bus 702.

A first storage device 722 and a second storage device 724 are operatively coupled to system bus 702 by the I/O adapter 720. The storage devices 722 and 724 can be any of a disk storage device (e.g., a magnetic or optical disk storage device), a solid state magnetic device, and so forth. The storage devices 722 and 724 can be the same type of storage device or different types of storage devices.

A speaker 732 is operatively coupled to system bus 702 by the sound adapter 730. A transceiver 742 is operatively coupled to system bus 702 by network adapter 740. A display device 762 is operatively coupled to system bus 702 by display adapter 760.

A first user input device 752, a second user input device 754, and a third user input device 756 are operatively coupled to system bus 702 by user interface adapter 750. The user input devices 752, 754, and 756 can be any of a keyboard, a mouse, a keypad, an image capture device, a motion sensing device, a microphone, a device incorporating the functionality of at least two of the preceding devices, and so forth. Of course, other types of input devices can also be used, while maintaining the spirit of the present principles. The user input devices 752, 754, and 756 can be the same type of user input device or different types of user input devices. The user input devices 752, 754, and 756 are used to input and output information to and from system 700.

Of course, the processing system 700 may also include other elements (not shown), as readily contemplated by one of skill in the art, as well as omit certain elements. For example, various other input devices and/or output devices can be included in processing system 700, depending upon the particular implementation of the same, as readily understood by one of ordinary skill in the art. For example, various types of wireless and/or wired input and/or output devices can be used. Moreover, additional processors, controllers, memories, and so forth, in various configurations can also be utilized as readily appreciated by one of ordinary skill in the art. These and other variations of the processing system 700 are readily contemplated by one of ordinary skill in the art given the teachings of the present principles provided herein.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure and are within the scope of this disclosure.

The foregoing illustrates some of the possibilities for practicing the invention. Many other embodiments are possible within the scope and spirit of the invention. It is, therefore, intended that the foregoing description be regarded as illustrative rather than limiting, and that the scope of the invention is given by the appended claims together with their full range of equivalents.

## Claims

1. A method for activating a device, comprising:
tracking user actions (402) for a plurality of connected devices;
determining a transition likelihood that characterizes the likelihood that a user will activate a second device after a first device has been activated for each pair of connected devices, based on the tracked user actions (408); and
activating (410) a device responsive to a user action based on the transition likelihood and the tracked user actions.

2. The method of claim 1, further comprising setting a device (416) state for the activated device based on the tracked user actions.

3. The method of claim 2, wherein the device state comprises playback of a content source determined to be most likely activated by the user based on the tracked user actions (404).

4. The method of any preceding claim, wherein the plurality of connected devices are each connected to one another via high-definition multimedia interface (HDMI) connections (702).

5. The method of claim 4, wherein the plurality of connected devices are each configured to communicate using the HDMI consumer electronic control protocol (608).

6. The method of claim 5, wherein activating the device comprises issuing a CEC message to the device (410).

7. The method of any preceding claim, wherein tracking user actions comprises tracking a time that each action is performed and wherein activating the device comprises selecting a device to activate responsive to a current time of day.

8. The method of claim 7, wherein selecting the device to activate is further responsive to a current day of the week.

9. The method of any preceding claim wherein activating the device comprises selecting the activated device as an input for a device that is a subject of the user's action.

10. A non-transitory computer readable storage medium comprising a computer readable program for activating a device, wherein the computer readable program when executed on a computer causes the computer to perform the steps of of any one of claims 1 to 9.

11. A system for activating a device, comprising:
a habit tracking module (112) configured to track user actions (410) for a plurality of connected devices;
a data analysis module comprising a processor configured to determine a transition likelihood (408) that characterizes the likelihood that a user will activate a second device after a first device has been activated for each pair of connected devices, based on the tracked user actions; and
a control module configured to activate a device responsive to a user action based on the transition likelihood (410) and the tracked user actions.

12. The system of claim 11, wherein the control module is further configured to set a device state for the activated device based on the tracked user actions; wherein the device state comprises playback of a content source determined to be most likely activated by the user based on the tracked user actions.

13. The system of claim 11 or 12 , further comprising a plurality of connected devices, connected to one another via high-definition multimedia interface (HDMI) connections (702), wherein the plurality of connected devices are each configured to communicate using the HDMI consumer electronic control protocol and the control module is configured to issue a CEC message to the device.

14. The system of claim any one of claims 11 to 13, wherein the habit tracking module is further configured to track a time that each action is performed and wherein the control module is further configured to select a device to activate responsive to a current time of day.

15. The system of claim 14, wherein the control module is further configured to select a device responsive to a current day of the week and select the activated device as an input for a device that is a subject of the user's action.
